# EUROPÄISCHE PATENTSCHRIFT

(11) **EP 1 199 235 B1**
(45) Veröffentlichungstag und Bekanntmachung des Hinweises auf die Patenterteilung: **24.11.2004**
(21) Anmeldenummer: 01122838.4
(22) Anmeldetag: 22.09.2001
(51) Int. Cl.: B60T 5/00

(54) **Fahrzeug-Bremsenkühlvorrichtung**
Vehicle brake cooling device
Appareil de refroidissement des freins d'un véhicule

(30) Priorität: 19.10.2000 DE 10051835
(43) Veröffentlichungstag der Anmeldung: 24.04.2002
(73) Patentinhaber: Bayerische Motoren Werke Aktiengesellschaft, 80809 München (DE)
(72) Erfinder: Zuck, Bernhard, Dr., 80333 München (DE); Kerschbaum, Hans, 85669 Pastetten (DE); Mayer, Jochen, 85716 Unterschleissheim (DE)

(56) Entgegenhaltungen:
- DE-A- 3 813 972
- DE-A- 3 910 020
- DE-A- 10 057 364
- DE-C- 4 242 933
- GB-A- 2 269 144

## Beschreibung

Die Erfindung betrifft eine Fahrzeug-Bremsenkühlvorrichtung mit einem Kühlluftschacht, der von einer um eine Schwenkachse verschwenkbaren Klappe verschließbar ist, wobei ein Öffnen dieser Klappe durch die beim Abbremsen des Fahrzeuges auftretenden Beschleunigungskräfte bewirkt wird, während ein Schließen dieser Klappe durch den Fahrtwind hervorgerufen wird. Zum technischen Umfeld wird neben der GB 2 269 144 A insbesondere auf die DE 38 13 972 A1 verwiesen.

Bekannt ist eine Luftführung zur Kühlung der Vorderachs-Bremsen eines Fahrzeuges, insbesondere PKW's, wobei ein spezieller Kühlluftschacht mit einer Eintrittsöffnung in der sog. Frontschürze oder dem Fzg.-Unterboden vorgesehen ist, durch den ein Kühlluftstrom zur Bremse bzw. Bremsscheibe hingeleitet wird. Ist ein solcher Kühlluftschacht kontinuierlich offen, so erhöht dies nachteiligerweise den Luftwiderstand des Fahrzeugs, ferner verschmutzen die Bremsscheiben des Fahrzeugs und werden bei Regen verstärkt benetzt. Bekannt sind darüber hinaus Klappen in diesen Kühlluftschächten, die bspw. von einem Elektromotor oder einer Unterdruckdose oder einem Magneten in gewünschter Weise bewegt werden können (vgl. bspw. die oben erstgenannte GB 2 269 144 A).

Um den mit derartigen Stellmotoren für die Klappenbetätigung verbundenen Aufwand zu vermeiden, ist in der eingangs zweitgenannten DE 38 13 972 A1 vorgeschlagen, die in einem Kühlluftschacht angeordnete Klappe über eine derartig außermittig angeordnete Schwenkachse verschwenkbar zu lagern, so dass die bei starken Verzögerungen des Fahrzeugs an der Klappe angreifenden Trägheitskräfte diese in ihre Öffnungsstellung schwenken, während in anderen Fahrzuständen der Fahrtwind die Klappe in ihre Schließstellung zurückschwenkt.

Theoretisch erscheint eine derart einfache Klappenbetätigung sehr vorteilhaft, jedoch zeigen sich Auslegungsprobleme bei der Umsetzung in die Praxis, da bei bestimmten Fahrzuständen des Fahrzeugs auch ganz bestimmte Klappenpositionen gewährleistet sein sollen, die Klappe auch bei relativ geringen Fahrgeschwindigkeiten wieder in ihre geschlossene Position überführt werden soll und andererseits die Klappe nicht derart leicht verschwenkbar sein soll, dass sie kontinuierlich zwischen ihrer Offenstellung und Schließstellung hin und her bewegt wird.

Daher ist es Aufgabe der vorliegenden Erfindung, eine gegenüber dem bekannten Stand der Technik verbesserte Schließ-Vorrichtung für die Klappe aufzuzeigen.
Die Lösung dieser Aufgabe ist gekennzeichnet durch einen turbinenartigen Wandler, der vom Fahrtwind angetrieben wird und die Schließbewegung der Klappe initiiert. Vorteilhafte Aus- und Weiterbildungen sind im abhängigen Patentanspruch aufgelistet.

Erfindungsgemäß ist ein spezieller sog. Wandler vorgesehen, der unter Ausnutzung des Fahrtwindes die sich in ihrer Offenposition befindende Klappe in gewünschter Weise in ihre Schließposition bewegt. Dieser Wandler ist turbinenartig ausgebildet und kann somit vom Fahrtwind angetrieben seine gewünschte Funktion erfüllen, wobei hinsichtlich der konkreten Ausführung deutlich größere Freiheiten bestehen als im bekannten Stand der Technik, d.h. es kann bspw. durch Vorsehen einer geeigneten Übersetzung sichergestellt werden, dass die Klappe bereits bei relativ geringer Fahrgeschwindigkeit geschlossen wird. Andererseits ist es auch möglich, durch eine spezielle Auslegung des Wandlers eine Schließbewegung der Klappe erst nach einer gewissen Zeitdauer oder in Abhängigkeit von anderen Randbedingungen hervorzurufen. Beispielsweise kann durch diesen Wandler die Klappe auch in einer gewünschten Position gehalten werden, wobei der Aufwand zum Verschwenken der Klappe vorteilhafterweise weiterhin gering ist, nachdem der Wandler durch seine turbinenartige Arbeitsweise bzw. Gestaltung die hierfür erforderliche Energie aus dem Fahrtwind gewinnt.

In einer bevorzugten Ausführungsform der Erfindung ist ein Turbinenteil des turbinenartigen Wandlers stromab der Klappe im Kühlluftschacht angeordnet und über ein Getriebe sowie eine schaltbare Kupplung mit einem Verschwenkantrieb für die Klappe verbindbar, wobei die schaltbare Kupplung beim Öffnen der Klappe selbsttätig ausklinken kann, während durch ein Ingangsetzen des Turbinenteils die Kupplung ggf. zeitverzögert geschlossen wird. Dabei kann ein Zusatzgewicht an der Klappe deren Öffnen in der gewünschten Weise veranlassen.

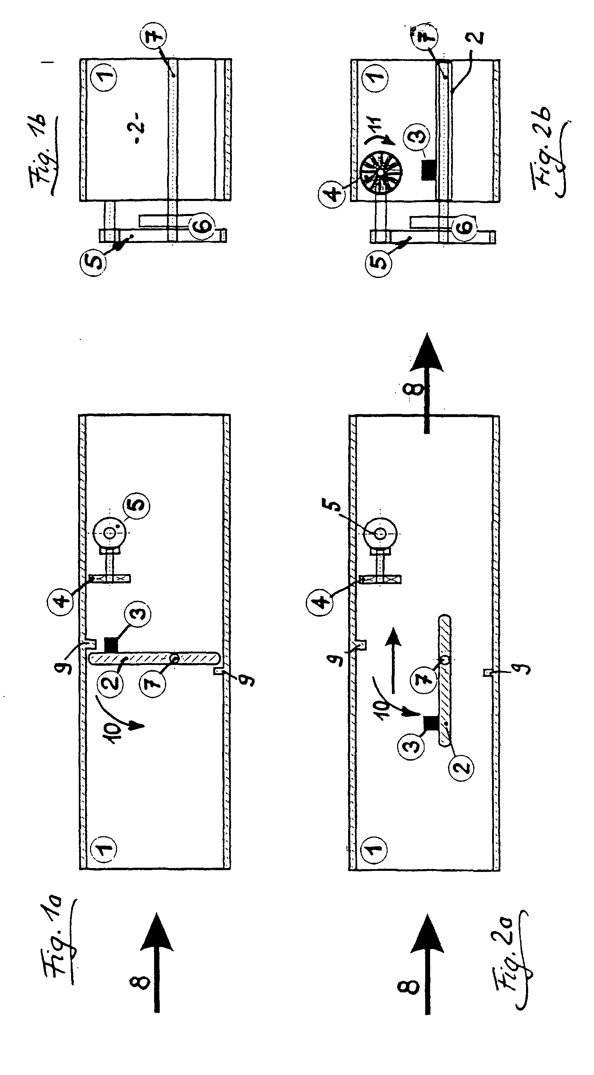

Hierzu wird auch auf die beigefügten Prinzipskizzen eines bevorzugten Ausführungsbeispieles verwiesen, welche im folgenden erläutert werden. In den **Figuren 1a, 2a** dargestellt ist jeweils ein Längsschnitt durch einen erfindungsgemäßen Kühlluftschacht 1 zur Führung eines Kühlluftstromes 8 zur Vorderachsbremse eines Kraftfahrzeuges, wobei in **Fig.1a** der Kühlluftschacht 1 von einer Klappe 2 verschlossen ist, die sich in **Fig.2a** in ihrer Offen-Position befindet. Die Figuren **1b, 2b** zeigen die jeweilige Ansicht von vorne auf den Kühlluftschacht 1, d.h. eine Ansicht gemäß Pfeil 8.

Der Einfachheit halber nicht dargestellt ist somit weder das Kraftfahrzeug bzw. Fahrzeug, an welchem sich die erfindungsgemäße Bremsenkühlvorrichtung befindet, noch die bevorzugt an der Fzg.-Vorderachse vorgesehene Bremse, welche mittels eines Kühlluftstromes, der durch den Kühlluftschacht 1 gemäß Pfeilrichtung 8 von links nach rechts geführt wird, gekühlt werden soll (**Figuren 2a, 2b**) bzw. nicht mit Kühlluft 8 beaufschlagt werden soll, wozu dann eine bzw. die bereits erwähnte Klappe 2 den Kühlluftschacht 1 verschließt (**Figuren 1a, 1b**). Dabei wird der Kühlluftstrom 8 aus dem bei bewegtem Fahrzeug auftretenden Fahrtwind gewonnen bzw. von diesem abgezweigt, so dass sich das Fahrzeug gegen Pfeilrichtung 8 bewegt.

Wie ersichtlich ist die Klappe 2 um eine Schwenkachse 7 verschwenkbar im Kühlluftschacht 1 gelagert, wobei die Schwenkachse 7 hier asymmetrisch, d.h. außermittig durch die Klappe 2 verläuft. Hier auf der der Anströmseite abgewandten Rückseite der Klappe 2 ist ein Zusatzgewicht 3 vorgesehen, durch dessen Masse sowie Positionierung festgelegt werden kann, bei welcher Verzögerung die zunächst geschlossene Klappe 2 öffnet. Da die Fahrtrichtung des Fahrzeugs - wie bereits erwähnt - der Pfeilrichtung 8 entgegengerichtet ist, wirken bei einem Abbremsen des Fahrzeugs (negative) Beschleunigungskräfte auf das Zusatzgewicht 3 sowie auf die Klappe 2, so dass die zunächst geschlossene Klappe 2 (vgl. **Fig.1a**) durch diese Beschleunigungskräfte gemäß Pfeilrichtung 10 in ihre in **Fig.2a** dargestellte Offenposition verschwenkt wird.

Selbstverständlich ist ein nicht dargestellter Anschlag vorgesehen, der verhindert, dass die Klappe 2 bei dieser geschilderten Öffnungsbewegung weiter als in die dargestellte (horizontale) Lage verschwenkt wird, ebenso wie Anschläge 9 an der Innenwand des Kühlluftschachtes 1 vorgesehen sind, die die geschlossene Klappe 2 (vgl. **Fig.1a**) unter Einwirkung des Fahrtwindes 8 bzw. des auf die geschlossene Klappe 2 auftreffenden Kühlluftstromes 8 in ihrer geschlossenen Position halten d.h. die verhindern, dass die geschlossene Klappe 2 vom auftreffenden Fahrtwind 8 gegen Pfeilrichtung 10 verschwenkt und somit geöffnet wird.

Um die Klappe 2 ausgehend von ihrer geöffneten Position nach **Fig.2a** gegen Pfeilrichtung 10 in ihre geschlossene Position nach **Fig.1a** zurück zu verschwenken, ist ein sog. turbinenartiger Wandler vorgesehen, der vom Fahrtwind 8 bzw. vom Kühlluftstrom 8 selbst angetrieben wird und diese Klappen-Schließbewegung initiiert. Dieser sog. Wandler besteht aus einem Turbinenteil 4, welches hier sowie bevorzugt stromab der Klappe 2 im oder am Kühlluftschacht 1 angeordnet ist, und welches bei Beaufschlagung mit dem Kühlluftstrom 8 in eine Drehbewegung gemäß Pfeilrichtung 11 (vgl. **Fig.2b**) versetzt wird. Über eine nicht näher bezeichnete Welle wird diese Drehbewegung in ein in seiner Gesamtheit mit der Bezugsziffer 5 bezeichnetes Getriebe eingeleitet, das letztlich mit der Schwenkachse 7 der Klappe 2 in Verbindung steht bzw. über eine nicht näher dargestellte Kupplung 6 in Verbindung bringbar ist. Ist diese Kupplung 6 geschlossen, so wird ausgelöst durch die Drehbewegung 11 des Turbinenteils 4 die zunächst geöffnete Klappe 2 gegen Pfeilrichtung 10 in ihre geschlossene Position verschwenkt.

Bevorzugt wird diese Kupplung 6, die bei einer Öffnungsbewegung der Klappe 2 gemäß Pfeilrichtung 10 selbsttätig ausklinken kann, bei einem darauf folgenden Ingangsetzen des Turbinenteils 4 selbsttätig geschlossen, wobei dieses Schließen durch Vorsehen eines geeigneten Mechanismus zeitverzögert erfolgen kann. Im übrigen ist auch durch die Übersetzung im Getriebe 5 einstellbar, wie lange die Klappe 2 zumindest noch teilweise geöffnet bleibt, nachdem die Schließbewegung in Gang gesetzt wurde, d.h. wie schnell die Klappe 2 aus ihrer Offenposition in die Schließposition bewegt wird.

Da das Turbinenteil 4 stromab der Klappe 2 im Kühlluftschacht 1 angeordnet ist, wird dieses vorteilhafterweise nur dann mit einem (Kühl-)Luftstrom 8 beaufschlagt, wenn das Turbinenteil Arbeit verrichten, nämlich die Klappe 2 in ihre Schließposition bewegen soll. Dies bedingt jedoch, dass dann, wenn die Klappe 2 gegen Pfeilrichtung 10 bereits nahezu in ihre Schließposition geschwenkt ist, das Turbinenteil 4 kaum mehr mit einem Luftstrom beaufschlagt wird. Dann jedoch kann die vollständige Schließbewegung der Klappe 2 im wesentlichen alleine durch den auf die (in **Fig.1a** linksseitige) Klappen-Vorderseite auftreffenden Fahrtwind 8 veranlasst werden. Aus diesem Grunde ist - wie an sich bekannt - die Schwenkachse7 asymmetrisch bezüglich der Klappe 2 vorgesehen. Dabei kann ggf. auch alleine durch die Lage des Klappen-Schwerpunktes bezüglich der Schwenkachse 7 eine gewünschte durch eine negative Beschleunigung hervorgerufene Öffnungs-Verschwenkbewegung der Klappe 2 initiiert werden, ohne dass das Zusatzgewicht 3 benötigt wird, wie überhaupt eine Vielzahl von Details insbesondere konstruktiver Art durchaus abweichend vom gezeigten Ausführungsbeispiel gestaltet sein kann, ohne den Inhalt der Patentansprüche zu verlassen. Beispielsweise kann das Zusatzgewicht 3 an der jeweils günstigten Stelle angeordnet sein und die Schwenkachse 7 auch symmetrisch durch die Klappe verlaufen. Ferner kann der sog. turbinenartige Wandler auch außerhalb des Kühlluftschachtes 1, bspw. in einem Nebenkanal oder dgl., liegen. Stets erhält man mit relativ geringem Aufwand und insbesondere ohne die Notwendigkeit einer separaten Energiezufuhr eine Fahrzeug-Bremsenkühlvorrichtung, die sich optimal auf die tatsächlichen Anforderungen einstellen lässt.

## Patentansprüche

1. Fahrzeug-Bremsenkühlvorrichtung mit einem Kühlluftschacht, (1) der von einer um eine Schwenkachse (7) verschwenkbaren Klappe (2) verschließbar ist, wobei ein Öffnen dieser Klappe (2) durch die beim Abbremsen des Fahrzeuges auftretenden Beschleunigungskräfte bewirkt wird, während ein Schließen dieser Klappe durch den Fahrtwind (8) hervorgerufen wird,
**gekennzeichnet durch** einen turbinenartigen Wandler, (4, 5) der von Fahrtwind angetrieben wird und die Schließbewegung der Klappe (2) initiiert.

2. Fahrzeug-Bremsenkühlvorrichtung nach Anspruch 1,
**gekennzeichnet durch** zumindest eines der folgenden Merkmale:
• ein Turbinenteil (4) des turbinenartigen Wandlers ist stromab der Klappe im Kühlluftschacht angeordnet
• über ein Getriebe (5) sowie eine schaltbare Kupplung (6) ist das Turbinenteil (4) mit einem Verschwenkantrieb für die Klappe (2) verbindbar
• die schaltbare Kupplung (6) klinkt beim Öffnen der Klappe selbsttätig aus
• **durch** ein Ingangsetzen des Turbinenteils (4) wird die Kupplung 6 ggf. zeitverzögert geschlossen
• ein Zusatzgewicht (3) an der Klappe (2) veranlasst deren Öffnen in der gewünschten Weise.

## Claims

1. A vehicle brake cooling device comprising a cooling-air shaft (1) closable by a valve (2) pivotable around an axis (7), wherein the valve (2) is opened by the acceleration forces occurring when the vehicle slows down, whereas the valve is closed by the airstream (8), **characterised by** a turbine-like transducer (4, 5) which is driven by the airstream and initiates the closing motion of the valve (2).

2. A vehicle brake cooling device according to claim 1, **characterised by** at least one of the following features:
a turbine part (4) of the turbine-like transducer is disposed in the cooling-air shaft downstream of the valve,
a gear unit (5) and a switchable clutch (6) connects the turbine part (4) to a drive for pivoting the valve (2),
the switchable clutch (6) automatically disengages when the valve opens,
the clutch (6) is closed, optionally after a delay, by starting up the turbine part (4), and
an additional weight (3) on the valve (2) opens it in the desired manner.

## Revendications

1. Dispositif de refroidissement de freins de véhicule comprenant un conduit d'air de refroidissement (1) qui se ferme à l'aide d'un volet (2) basculant autour d'un axe de basculement (7), ce volet (2) étant ouvert par les forces d'accélération produites lors du freinage du véhicule alors que la fermeture du volet est produite par le vent de circulation (8),
**caractérisé par**
un convertisseur (4, 5) en forme de turbine, entraîné par le vent de circulation et qui lance le mouvement de fermeture du volet (2).

2. Dispositif de refroidissement de freins de véhicule selon la revendication 1,
**caractérisé par**
au moins l'une des caractéristiques suivantes :
- une partie de turbine (4) du convertisseur en forme de turbine est installée en aval du volet dans la trémie de vent de refroidissement,
- une transmission (5) et un embrayage commutable (6) permettent de relier la partie de turbine (4) à un moyen d'entraînement de basculement du volet (2),
- l'embrayage commutable (6) se dégage automatiquement lors de l'ouverture du volet,
- la mise en route de la partie de turbine (4) ferme l'embrayage (6) le cas échéant de façon retardée,
- un contrepoids (3) est monté sur le volet (2) pour assurer son ouverture de manière souhaitée.
